# FASCICULE DE BREVET EUROPEEN

(11) **EP 3 207 294 B1**
(45) Date de publication et mention de la délivrance du brevet: **26.09.2018**
(21) Numéro de dépôt: 15777709.5
(22) Date de dépôt: 13.10.2015
(51) Int. Cl.: F16K 5/06, F16K 5/20

(54) **ASSEMBLAGE DE MISE EN COMPRESSION DE SIÈGE DE VANNE À BOULE**
ANORDNUNG ZUM VERDICHTEN EINES KUGELVENTILSITZES
ASSEMBLY FOR COMPRESSING A BALL VALVE SEAT

(30) Priorité: 15.10.2014 FR 1459891
(43) Date de publication de la demande: 23.08.2017
(73) Titulaire: Commissariat à l'Énergie Atomique et aux Énergies Alternatives, 75015 Paris (FR); Technetics Group France SAS, 42000 Saint-Etienne (FR)
(72) Inventeur: GUIMET, Laurent, F-42240 Unieux (FR); LEDRAPPIER, Florent, F-26130 Saint-Paul-Trois-Chateaux (FR); LEFRANCOIS, Michel, F-42000 Saint Etienne (FR)
(74) Mandataire: Brevalex
(86) Numéro de dépôt international: PCT/EP2015/073614
(87) Numéro de publication internationale: WO 2016/059015

(56) Documents cités:
- US-A- 3 891 183
- US-A- 4 505 294
- US-A1- 2012 211 690

## Description

### DOMAINE TECHNIQUE

La présente invention se rapporte au domaine général des vannes à boules, et tout particulièrement au domaine des systèmes de mise en compression des sièges de vannes à boules.

L'invention trouve des applications dans différents domaines de l'industrie, et notamment pour son utilisation sur des vannes à boules installées sur des conduits de fluides chauds, colmatants et/ou potentiellement abrasifs. Elle s'applique par exemple aux vannes à boules utilisées dans l'industrie de la cokéfaction.

L'invention propose ainsi un assemblage de mise en compression de siège de vanne à boule.

### ÉTAT DE LA TECHNIQUE ANTÉRIEURE

Une vanne à boule est un type de vanne très couramment utilisé dans l'industrie. Par conception, l'étanchéité amont-aval de la vanne à boule est assurée par un joint circulaire venant épouser la boule. Ce joint circulaire peut être réalisé en un matériau élastomère ou autre polymère, comme par exemple du polytétrafluoroéthylène (PTFE), mais dans l'ensemble des applications à haute température, soit typiquement supérieure à 250°C, on retrouve fréquemment des joints métalliques appelés alors usuellement « sièges ». Ces sièges n'ayant généralement pas un retour élastique comme pour les matériaux élastomères ou polymères, on choisit souvent de leur assortir des systèmes de mise en compression sur la boule.

Il existe ainsi de très nombreux systèmes de mise en compression des sièges sur les boules des vannes à boules. Un tel système comprend généralement un élément ressort poussant le siège. Cet élément ressort est indispensable lors d'une utilisation en température. En effet, en cas de température élevée, la boule va se dilater et il importe alors de garder un contact entre le siège et la boule, quelles que soient les variations dimensionnelles. Il importe également d'assurer une étanchéité secondaire entre le siège et le corps de vanne, afin de boucher le chemin de fuite présent.

Des solutions ont ainsi déjà été envisagées dans l'art antérieur. Par exemple, le brevet US 3,575,198 A décrit l'utilisation d'une rondelle Belleville comme élément ressort. Une bague à lèvre en matériau élastomère ou polymère assure quant à elle l'étanchéité secondaire. Toutefois, un tel système n'est efficace que sur une plage de températures limitée (généralement 300°C au maximum), du fait de l'utilisation d'un matériau élastomère ou polymère.

Par ailleurs, le brevet US 3,891,183 A divulgue quant à lui une solution dans laquelle un réseau de ressorts hélicoïdaux appuie sur le siège, l'étanchéité secondaire étant assurée par un empilement de bagues de sections carrées. Ces bagues carrées peuvent être par exemple réalisées en graphite, auquel cas on accroît fortement la tenue en température de l'ensemble, à savoir supérieure à 500°C. Cette solution a par contre un fort encombrement axial et ne pourra pas être utilisé sur un corps de vanne compact. Qui plus est, dans l'hypothèse de l'utilisation du graphite, ce dernier nécessite une forte compression afin d'être étanche, en particulier une compression axiale de l'ordre de 15 ou 20 MPa au minimum est généralement nécessaire. L'effort global de compression, généré par les ressorts, va être transmis à la boule au niveau de la surface de contact et peut potentiellement gêner la manoeuvre de la boule.

En outre, en alternative à l'utilisation du graphite, le brevet US 8,496,226 B2 présente un assemblage dans lequel le siège est poussé par un soufflet métallique, ce soufflet assurant la fonction ressort et la fonction étanchéité avec un support rapporté sur lequel il est soudé. L'étanchéité entre le corps de vanne et le support est garantie grâce à un joint métallique en forme de C (« C-Ring » en anglais). Cette solution semble peu adaptée à une utilisation avec des fluides colmatants, comme par exemple des fluides présents sur des unités de cokéfaction. En effet, au moindre refroidissement de ces fluides, ceux-ci peuvent rapidement se solidifier et alors bloquer le soufflet. La fonction ressort est alors perdue. La même remarque est par ailleurs applicable au réseau de ressorts divulgué par le brevet US 3,891,183 A décrit ci-dessus, qui peuvent s'encrasser à l'identique.

Enfin, la société canadienne Velan, établie à Montréal, propose une solution à ces problèmes avec sa gamme de vannes dédiée à la cokéfaction, telle que décrite dans la brochure commerciale anglophone intitulée « Complete valve solutions for the Delayed Coker industry », publiée en 2013. Le système d'étanchéité comprend un soufflet métallique, comme pour le brevet US 8,496,226 B2. Pour éviter l'encrassement, on implante, auprès des soufflets, des piquages sur le corps de vanne permettant d'injecter de la vapeur depuis l'extérieur. On évite ainsi le refroidissement et donc le colmatage du soufflet. Ce système semble efficace mais présente un inconvénient majeur en ce qu'il implique une forte consommation de vapeur, celle-ci s'évacuant dans la conduite principale.

Un assemblage annulaire de mise en compression de siège de vanne à boule est aussi connu du document US-A-2012/0211690.

### EXPOSÉ DE L'INVENTION

Il existe par conséquent un besoin pour proposer une solution alternative aux systèmes actuels de mise en compression des sièges de vannes à boules, afin notamment d'être adaptée à des vannes à boules installées sur des conduits de fluides chauds, colmatants et/ou potentiellement abrasifs.

L'invention a donc pour but de remédier au moins partiellement aux besoins mentionnés ci-dessus et aux inconvénients relatifs aux réalisations de l'art antérieur.

L'invention a ainsi pour objet, selon l'un de ses aspects, un assemblage annulaire de mise en compression de siège de vanne à boule, caractérisé en ce qu'il comporte :
- un corps de vanne ou un insert rapporté sur le corps de vanne, pourvu d'un lamage annulaire interne définissant au moins un diamètre intérieur de lamage du corps de vanne ou de l'insert,
- un fourreau inséré dans ledit lamage annulaire interne, fixé et centré par rapport au corps de vanne ou à l'insert, le fourreau définissant au moins un diamètre extérieur du fourreau,
le diamètre intérieur de lamage du corps de vanne ou de l'insert étant plus grand que le diamètre extérieur du fourreau de sorte que le corps de vanne ou l'insert définisse avec le fourreau un logement annulaire dans lequel l'assemblage comporte successivement, notamment de l'aval vers l'amont :
- un empilage aval de bagues de tête, notamment en graphite, présentant un diamètre intérieur égal au diamètre extérieur du fourreau et un diamètre extérieur égal au diamètre intérieur du corps ou de l'insert, cet empilage aval étant destiné à être juxtaposé au siège de vanne à boule,
- une cale annulaire de tête, ajustée glissante entre le diamètre extérieur du fourreau et le diamètre intérieur du corps ou de l'insert,
- un empilage de moyens de compression permettant la mise en compression du siège de vanne à boule,
- une cale annulaire de fond, ajustée glissante entre le diamètre extérieur du fourreau et le diamètre intérieur du corps ou de l'insert, et
- un empilage amont de bagues de fond, notamment en graphite, présentant un diamètre intérieur égal au diamètre extérieur du fourreau et un diamètre extérieur égal au diamètre intérieur du corps ou de l'insert.

Grâce à l'invention, il peut être possible d'obtenir un assemblage compact de mise en compression d'un siège de vanne à boule. Un tel assemblage peut être utilisable à des températures élevées, par exemple supérieures à 500°C, et peut difficilement être colmaté par le fluide véhiculé. Les moyens de compression peuvent être protégés du colmatage grâce aux étanchéités des bagues amont et aval, notamment en graphite souple. L'assemblage présente une adaptabilité aux variations dimensionnelles, par exemple aux dilatations/contractions, et peut permettre de maintenir de manière permanente un effort suffisant de contact entre le siège et la boule, et ce quelles que soient ces variations. De plus, l'assemblage selon l'invention peut être efficace sans injection de vapeur de nettoyage.

L'assemblage de mise en compression selon l'invention peut en outre comporter l'une ou plusieurs des caractéristiques suivantes prises isolément ou suivant toutes combinaisons techniques possibles.

Le logement annulaire formé par l'assemblage du fourreau relativement au corps de vanne ou à l'insert est avantageusement destiné à être ouvert vers la boule de la vanne et fermé à l'opposé de la boule.

De façon avantageuse, l'empilage de moyens de compression comporte un ou plusieurs ressorts hélicoïdaux séparés entre eux par des intercalaires annulaires.

Les ressorts hélicoïdaux peuvent notamment être des ressorts à spires jointives refermés sur eux-mêmes, préférentiellement par soudure, présentant à l'état de repos la forme de tores.

L'empilage peut se faire avec des ressorts identiques de sorte à obtenir à charge égale des augmentations de l'écrasement et du retour élastique proportionnelles au nombre de ressorts.

L'utilisation de ressorts hélicoïdaux de forme torique peut permettre d'assurer un bon retour élastique. Ils présentent une certaine compacité et fournissent l'effort nécessaire pour densifier le graphite.

Toutefois, ce choix n'est nullement limitatif. D'autres moyens de compression peuvent être envisagés dans le cadre de la présente invention. Par exemple, les moyens de compression pourraient comporter un soufflet mécanique et/ou un empilage de rondelles élastiques du type Belleville. Le soufflet mécanique présente néanmoins l'inconvénient de demander un fort encombrement axial et reste relativement onéreux. Quant aux rondelles élastiques du type Belleville, compte-tenu de l'espace disponible pour l'assemblage, elles ne peuvent généralement pas, par construction, exercer l'effort nécessaire à une densification suffisante du graphite.

Lors du montage de l'assemblage selon l'invention, l'empilage de moyens de compression se retrouve comprimé entre le fond du lamage et le siège de vanne. Dans le cas de ressorts toriques, ceux-ci se retrouvent ainsi comprimés axialement, chaque spire étant comprimée radialement en section. Le choix d'une juste cote de compression peut permettre d'obtenir l'effort suffisant pour densifier les empilages de bagues de tête et de fond formant des étanchéités. Ce faisant, on peut empêcher, de part et d'autre de l'empilement de ressorts, l'entrée de fluide dans cet empilement. En effet, par l'intermédiaire de cette compression, les empilages de bagues de tête et de fond, notamment en graphite, s'expansent radialement et les étanchéités sont assurées aux contacts avec le fourreau et le corps de vanne ou l'insert. L'empilement de ressorts peut aussi permettre d'assurer la mise en compression du siège sur la boule. Il est enfin à noter que, les empilages de bagues de tête et de fond étant eux-mêmes comprimés, leur propre retour élastique rentre en compte dans le calcul du retour élastique global de l'assemblage. Ainsi, selon le nombre de ressorts que comporte l'empilement de ressorts et la hauteur des cales annulaires de tête et de fond, il peut être possible d'ajuster le retour élastique de l'ensemble de l'assemblage.

Les faces axiales des intercalaires annulaires et/ou les faces axiales des cales annulaires de tête et de fond, en contact avec les ressorts hélicoïdaux, peuvent comporter des baquets sous la forme d'arcs, notamment définis de sorte que le centre de chacun des arcs est situé sur un diamètre identique au diamètre moyen du ressort hélicoïdal et de sorte que le rayon de chaque arc est égal ou supérieur au rayon de spire du ressort hélicoïdal.

Le rayon de chaque arc peut être supérieur à une valeur donnée, définie comme le rayon mathématiquement équivalent à la courbure de l'ellipse du ressort déformé, au voisinage du point de contact avec un intercalaire annulaire et/ou une cale annulaire de tête ou de fond.

L'empilage aval de bagues de tête et/ou l'empilage amont de bagues de fond peuvent par ailleurs comporter des bagues graphites sous la forme d'éléments graphites de section carrée ou rectangulaire.

En variante, l'empilage aval de bagues de tête et/ou l'empilage amont de bagues de fond peuvent comporter des bagues graphites sous la forme d'éléments graphites coniques.

En particulier, les bagues de tête et/ou de fond peuvent être des éléments graphites coniques du type EVSP® fabriqués notamment par la société Garlock Sealing Technologies.

L'empilage aval de bagues de tête et/ou l'empilage amont de bagues de fond peuvent notamment comporter chacun au moins une bague conique mâle, une bague biconique et une bague conique femelle.

Selon un mode de réalisation particulier de l'invention, le lamage annulaire interne peut être étagé, définissant un premier diamètre intérieur de lamage et un deuxième diamètre intérieur de lamage du corps de vanne ou de l'insert, le deuxième diamètre intérieur de lamage étant inférieur au premier diamètre intérieur de lamage et supérieur au premier diamètre extérieur du fourreau. De même, le fourreau peut être étagé, définissant un premier diamètre extérieur et un deuxième diamètre extérieur du fourreau, le deuxième diamètre extérieur étant inférieur au premier diamètre intérieur de lamage du corps ou de l'insert et supérieur au premier diamètre extérieur du fourreau.

Par ailleurs, le deuxième diamètre intérieur de lamage peut être formé au niveau de la cale annulaire de fond et de l'empilage amont de bagues de fond, étant ainsi configuré pour permettre le guidage de la cale annulaire de fond et de l'empilage amont de bagues de fond uniquement. De même, le deuxième diamètre extérieur peut être formé au niveau de l'empilage aval de bagues de tête et de la cale annulaire de tête, étant ainsi configuré pour permettre le guidage de l'empilage aval de bagues de tête et de la cale annulaire de tête uniquement.

En outre, la cale annulaire de fond peut être étagée, notamment de la même manière que le lamage annulaire interne. De même, la cale annulaire de tête peut être étagée, notamment de la même manière que le fourreau.

L'assemblage de mise en compression de siège de vanne à boule selon l'invention peut comporter l'une quelconque des caractéristiques énoncées dans la description, prises isolément ou selon toutes combinaisons techniquement possibles avec d'autres caractéristiques.

### BRÈVE DESCRIPTION DES DESSINS

L'invention pourra être mieux comprise à la lecture de la description détaillée qui va suivre, d'exemples de mise en oeuvre non limitatifs de celle-ci, ainsi qu'à l'examen des figures, schématiques et partielles, du dessin annexé, sur lequel :
- la figure 1 représente, en coupe, un exemple de réalisation d'une vanne à boule comportant un assemblage de mise en compression du siège de la vanne à boule conforme à l'invention,
- la figure 2 représente, en coupe, la partie A de la vanne à boule de la figure 1, et
- la figure 3 est une vue similaire à celle de la figure 2, représentant une variante de réalisation d'un assemblage de mise en compression conforme à l'invention.

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

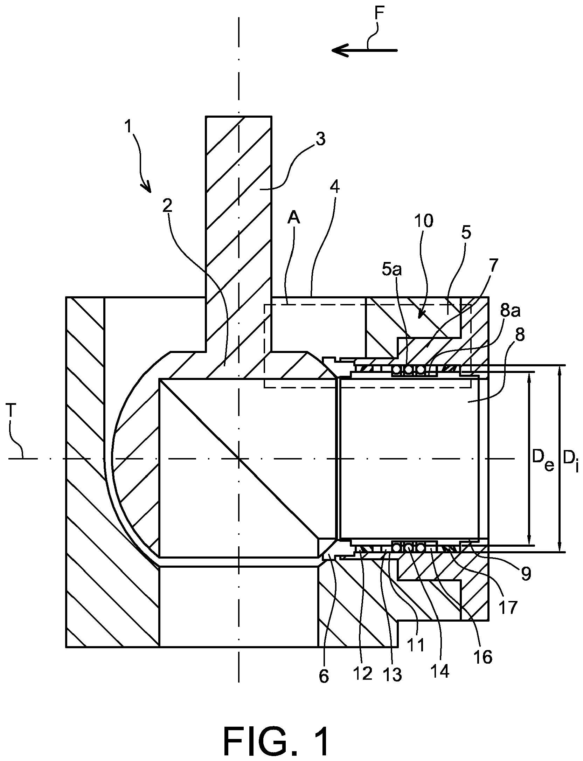

Dans toute la description, il est à noter que les termes amont et aval sont à considérer par rapport à une direction principale F d'écoulement normal des fluides (de l'amont vers l'aval) pour une vanne 1 à boule, soit de l'assemblage de mise en compression 10 de la vanne 1 vers la boule 2 tel que représenté sur les figures 1 à 3. Par ailleurs, on appelle axe T de la vanne 1, l'axe longitudinal de la boule 2 et du fourreau 8, perpendiculaire à l'axe longitudinal de la tige 3, comme représenté sur la figure 1. Une direction axiale correspond à la direction de l'axe T de la vanne 1. En outre, les adjectifs et adverbes axial et axialement sont utilisés en référence à la direction axiale précitée.

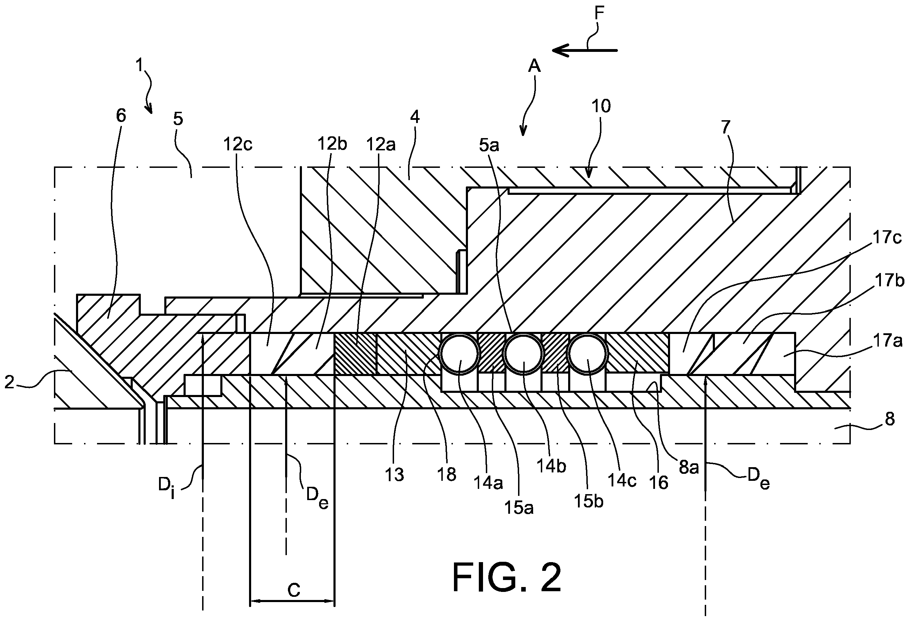

En référence aux figures 1 et 2, il est tout d'abord présenté ci-après, en coupe, un premier exemple de réalisation d'une vanne à boule 1 comportant un assemblage 10 de mise en compression du siège 6 de la vanne à boule 1 conforme à l'invention.

La vanne à boule 1 comporte ainsi une boule 2 liée à une tige 3, et un siège 6 de vanne. L'ensemble se trouve dans un corps 5 de vanne.

La vanne 1 est fermée par un couvercle (non représenté), qui se cale sur une surface d'appui 4. Par ailleurs, sur la boule 2, vient se caler le siège 6, qui y assure l'étanchéité usuelle d'une telle vanne 1.

Un insert 7 est fixé dans un lamage du corps 5. De plus, l'assemblage 10 comporte un fourreau 8, fixé et centré dans l'insert 7 au niveau de la zone de contact 9. La fixation peut par exemple être assurée par une soudure dans cette même zone 9.

L'insert 7 comporte, dans cet exemple des figures 1 et 2, un lamage intérieur de diamètre Di. Par ailleurs, le fourreau 8 présente un diamètre extérieur De. Un dégagement 8a est formé sur la surface extérieure de diamètre De du fourreau 8, au niveau des ressorts 14a-14c.

Le diamètre intérieur Di de l'insert 7 est plus grand que le diamètre extérieur De du fourreau 8 de sorte que l'insert 7 définit avec le fourreau 8 un logement annulaire 11 dans lequel l'assemblage 10 comporte successivement de l'aval vers l'amont, soit depuis la boule 2 vers l'assemblage 10, une pluralité d'éléments permettant la mise en compression, à savoir : un empilage aval 12 de bagues de tête en graphite juxtaposé au siège 6 de vanne à boule 1, une cale annulaire de tête 13, un empilage de ressorts hélicoïdaux 14 permettant la mise en compression du siège 6 de vanne à boule 1, une cale annulaire de fond 16 et un empilage amont 17 de bagues de fond en graphite.

La figure 2 montre une vue de détail selon A de l'assemblage 10 de la figure 1.

Dans cet exemple, les moyens de compression 14 comportent trois ressorts toriques 14a, 14b et 14c (de l'aval vers l'amont). Ces ressorts 14a, 14b et 14c sont séparés par des intercalaires 15a et 15b, centrés sur le diamètre intérieur Di de l'insert 7. Le nombre de ressorts, et donc d'intercalaires, peut varier selon la raideur globale d'assemblage voulue.

L'empilage de ressorts 14 est séparé, grâce à la cale de fond 16 également centrée sur le diamètre intérieur Di de l'insert 7, de l'empilage amont 17 de bagues de fond en graphite, composé (de l'amont vers l'aval) d'une bague conique mâle 17a, d'une bague biconique 17b et d'une bague conique femelle 17c.

De plus, l'empilage de ressorts 14 est également séparé, grâce à la cale de tête 13 également centrée sur le diamètre intérieur Di de l'insert 7, de l'empilage aval 12 de bagues de tête en graphite, composé (de l'amont vers l'aval) d'une bague conique mâle 12a, d'une bague biconique 12b et d'une bague conique femelle 12c.

Le choix des bagues graphite de tête 12a-12c et de fond 17a-17c est important, car il conditionne l'étanchéité et donc la fiabilité de l'assemblage 10 en éliminant les risques de colmatage près de l'empilage de ressorts 14. Une première solution est d'utiliser des anneaux de graphite matricés de sections carrées ou rectangulaires.

Toutefois, ce type d'assemblage peut subir de fortes dilatations différentielles radiales, conduisant à une augmentation de la largeur du logement 11 (soit (Di-De)/2) alloué à l'assemblage 10. Or, les anneaux matricés carrés ou rectangulaires s'accommodent parfois mal de ce type de contraintes. On peut ainsi les remplacer par des systèmes à bagues graphites biconiques plus accommodants. Un produit commercial comprenant ce type de bagues dénommé « EVSP » et commercialisé par la société américaine Garlock Sealing Technologies peut être monté en lieu et place des anneaux de graphite rectangulaires ou carrés.

Sur les figures 1 et 2, l'assemblage 10 est représenté « au repos », c'est-à-dire sans compression. On observe alors un croisement C de géométrie entre le siège 6 et la cale d'étanchéité de tête 13. La longueur de ce croisement C correspond à la cote de compression de l'assemblage 10 complet.

Le dégagement 8a du fourreau 8 permet, le cas échéant, d'utiliser des ressorts 14a, 14b, 14c dont le diamètre en section est supérieur à la valeur (Di-De)/2. Ceci peut être un avantage pour optimiser la configuration géométrique des ressorts dans certains cas.

Par ailleurs, les ressorts 14a-14c se doivent d'être centrés par rapport au siège 6, afin d'assurer une mise en compression adéquate de ce dernier. Or, lors de leur compression, chaque spire circulaire prend en section une forme elliptique, dont le grand axe est perpendiculaire à l'axe du tore. En centrant chaque ressort 14a-14c sur son diamètre intérieur ou extérieur, il va lors de sa compression entrer en collision avec le diamètre de centrage choisi. A ce moment, la raideur du ressort peut alors significativement augmenter. Il importe donc de laisser un jeu important aux diamètres intérieur et extérieur de chaque ressort 14a-14c.

Pour les centrer, on peut avoir recours à un autre moyen : au niveau des cales 13, 16 et des intercalaires annulaires 15a, 15b précités, sur toutes les faces en contact avec des ressorts 14a, 14b, 14c, plutôt que d'opter pour des surfaces d'appui rectilignes, on peut y creuser axialement des baquets 18. En coupe, ceux-ci ont une forme d'arc.

Ainsi, par exemple, sur la cale de tête 13 se situe un baquet 18, en forme d'arc, de rayon égal ou supérieur au rayon de la section du ressort 14a et assurant un alignement du ressort 14a avec la cale 13. Cette construction est dupliquée sur l'ensemble des interfaces impliquant les ressorts 14b et 14c avec les intercalaires 15a, 15b ou la cale 16 voisine. Autrement dit, les intercalaires 15a, 15b et la cale 16 comportent également un baquet permettant leur positionnement relativement aux ressorts 14a, 14b, 14c.

Ainsi, le centre de chacun des baquets sous forme d'arcs est situé sur un diamètre identique au diamètre moyen du ressort torique. Le rayon de chaque arc est égal ou supérieur au rayon de spire de chaque ressort 14a, 14b, 14c. La présence de ces baquets permet un auto-alignement de l'empilement de ressorts 14a-14c avec les cales 13, 16 et intercalaires annulaires 15a, 15b. Bien entendu, les cales 13, 16 et intercalaires annulaires 15a, 15b sont eux-mêmes centrés dans l'assemblage 10 via leurs diamètres intérieurs ou extérieurs. Les ressorts toriques 14a-14c sont donc centrés dans l'assemblage 10 autrement que par leurs diamètres extérieurs ou intérieurs.

Dans la zone de contact entre les ressorts 14a-14c et les cales 13, 16 ou les intercalaires 15a, 15b, la forme elliptique du ressort comprimé peut être mathématiquement assimilée à un rayon de valeur Req. Idéalement, les baquets auront un rayon supérieur à Req pour libérer au maximum la cinématique du ressort.

On a par ailleurs évoqué précédemment dans la partie relative à l'état de la technique antérieure une difficulté du brevet US 3,891,183 A quant à la contradiction potentielle entre l'effort global EG nécessité pour densifier le graphite des bagues (qui peut être élevé) et l'effort d'appui du siège 6 sur la boule 1 que l'on cherche à réduire pour faciliter la rotation de la boule 1 lors des manoeuvres de la vanne 1. En effet, la mise en compression du graphite des bagues à une certaine pression d'assise PA va développer un effort global EG égal à Pi x (Di²-De²)/4 x PA, qui va être transmis à la boule 2 par le contact avec le siège 6. Afin de simplifier au maximum l'architecture du système, on peut chercher à maximiser le diamètre de tore des ressorts 14a, 14, 14c. Ce faisant, les ressorts 14a, 14b, 14c ont une plus grande compressibilité et un plus grand retour élastique. On peut ainsi éviter d'empiler un grand nombre de petits ressorts pour obtenir le même retour élastique. De plus, la pression d'assise PA étant le paramètre le plus influent quant à la qualité de l'étanchéité obtenue par les étanchéités graphite des cales de tête 13 et de fond 16, une augmentation de celle-ci peut aider à étancher et à réduire les risques de colmatage des ressorts 14a, 14b et 14c. Toutefois, l'augmentation du diamètre de tore implique que la différence Di-De augmente, et la pression d'assise PA augmentant également, l'effort résultant global EG appliqué au graphite augmente de même, augmentant aussi le couple de manoeuvre de la vanne à boule 1 de sorte à gêner la manoeuvre de la boule 2 (cet effort global EG étant intégralement retransmis au contact entre le siège 6 et la boule 2). Pour limiter l'effort global EG, il peut alors être tenté de réduire la section de l'assemblage 10, soit (Di-De)/2. Ceci implique toutefois de réduire d'autant la section des ressorts 14, 14b et 14c. Or, pour des raisons d'optimisation de configuration géométrique de l'assemblage 10, on souhaite généralement garder des ressorts de fortes sections, alliant grande déformabilité et bon retour élastique.

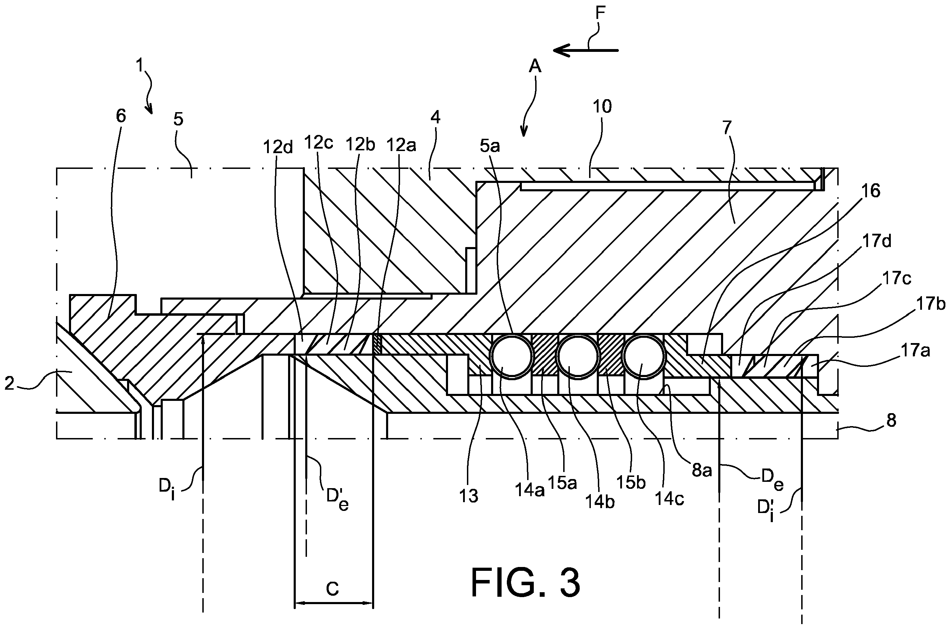

Ainsi, la figure 3 montre comment contourner cette difficulté. Elle représente une variante de réalisation de l'assemblage 10 selon l'invention, selon une vue semblable à celle de la figure 2.

Comme on peut le voir, l'empilement de moyens de compression 14, composé des ressorts 14a-14c et des intercalaires 15a, 15b reste inchangé.

On observe par contre deux étagements : un sur le fourreau 8 avec la présence d'un deuxième diamètre extérieur De', en plus du premier diamètre extérieur De, et un sur le lamage de l'insert 7 avec la présence d'un deuxième diamètre intérieur Di', en plus du premier diamètre intérieur Di.

Ainsi, l'insert 7, ou en variante le corps 5, peut être étagé uniquement dans sa partie en contact avec l'empilage 17 de bagues de fond en graphite. De même, le fourreau 8 peut être étagé uniquement dans sa partie au contact avec l'empilage 12 de bagues de tête.

Dans ce cas particulier, on obtient la relation suivante : Di' = De' = (Di+De)/2. Les références 17a, 17b, 17c et 17d et les références 12a, 12b, 12c et 12d représentent respectivement les étanchéités des bagues de fond et de tête, qui sont notamment des éléments graphites coniques du type EVSP, maintenus respectivement entre De' et Di, et entre De et Di'.

Ces deux empilages aval 12 et amont 17 d'étanchéités ont approximativement la même section, égale à la moitié de la section des empilements d'étanchéités de l'assemblage 10 de la figure 2. Pour un effort global EG identique appliqué au seuil, la contrainte appliquée aux étanchéités sera donc doublée. A la vue de la configuration de la figure 3, on comprend que l'étagement est rendu nécessaire pour des problématiques de montage. Sans l'étagement, il serait impossible d'insérer les rondelles intercalaires 15a et 15b entre les ressorts 14a-14c. Cet étagement oblige par ailleurs à modifier les cales cylindriques 13 et 16 de la configuration de la figure 2 par des cales 13 et 16 étagées en forme de « L » en section pour la configuration de la figure 3.

A empilement de ressorts égal, on réduit ainsi significativement la section des bagues graphite 17a-17d et 12a-12d.

Généralement, on cherchera à avoir sensiblement la même section sur les étanchéités des bagues de fond 17a-17d et de tête 12-12d, afin de leur appliquer des contraintes similaires lors de la compression. Aussi, via une approximation mathématique raisonnable, on peut avoir alors Di-De' = Di'-De.

Bien entendu, l'invention n'est pas limitée aux exemples de réalisation qui viennent d'être décrits. Diverses modifications peuvent y être apportées par l'homme du métier.

L'expression « comportant un » doit être comprise comme étant synonyme de « comportant au moins un », sauf si le contraire est spécifié.

## Revendications

1. Assemblage (10) annulaire de mise en compression de siège (6) de vanne à boule (1), comportant :
- un corps (5) de vanne ou un insert (7) rapporté sur le corps (5) de vanne, pourvu d'un lamage annulaire interne (5a) définissant au moins un diamètre intérieur de lamage (Di) du corps (5) de vanne ou de l'insert (7),
- un fourreau (8) inséré dans ledit lamage annulaire interne (5a), fixé et centré par rapport au corps (5) de vanne ou à l'insert (7), le fourreau (8) définissant au moins un diamètre extérieur (De) du fourreau (8),
le diamètre intérieur de lamage (Di) du corps (5) de vanne ou de l'insert (7) étant plus grand que le diamètre extérieur (De) du fourreau (8) de sorte que le corps (5) de vanne ou l'insert (7) définisse avec le fourreau (8) un logement annulaire (11) **caractérisé en ce que** dans ledit logement annulaire, l'assemblage (10) comporte successivement, notamment de l'aval vers l'amont :
- un empilage aval (12) de bagues de tête, notamment en graphite, présentant un diamètre intérieur égal au diamètre extérieur (De) du fourreau (8) et un diamètre extérieur égal au diamètre intérieur (Di) du corps (5) ou de l'insert (7), cet empilage aval (12) étant destiné à être juxtaposé au siège (6) de vanne à boule (1),
- une cale annulaire de tête (13), ajustée glissante entre le diamètre extérieur (De) du fourreau (8) et le diamètre intérieur (Di) du corps (5) ou de l'insert (7),
- un empilage de moyens de compression (14) permettant la mise en compression du siège (6) de vanne à boule (1),
- une cale annulaire de fond (16), ajustée glissante entre le diamètre extérieur (De) du fourreau (8) et le diamètre intérieur (Di) du corps (5) ou de l'insert (7), et
- un empilage amont (17) de bagues de fond, notamment en graphite, présentant un diamètre intérieur égal au diamètre extérieur (De) du fourreau (8) et un diamètre extérieur égal au diamètre intérieur (Di) du corps (5) ou de l'insert (7).

2. Assemblage selon la revendication 1, **caractérisé en ce que** l'empilage de moyens de compression (14) comporte un ou plusieurs ressorts hélicoïdaux (14a, 14b, 14c) séparés entre eux par des intercalaires annulaires (15a, 15b).

3. Assemblage selon la revendication 2, **caractérisé en ce que** les faces axiales des intercalaires annulaires (15a, 15b) et/ou les faces axiales des cales annulaires de tête (13) et de fond (16), en contact avec les ressorts hélicoïdaux (14a, 14b, 14c), comportent des baquets (18) sous la forme d'arcs, notamment définis de sorte que le centre de chacun des arcs est situé sur un diamètre identique au diamètre moyen du ressort hélicoïdal (14a, 14b, 14c) et de sorte que le rayon de chaque arc est égal ou supérieur au rayon de spire du ressort hélicoïdal (14a, 14b, 14c).

4. Assemblage selon la revendication 3, **caractérisé en ce que** le rayon de chaque arc est supérieur à une valeur donnée (Req), définie comme le rayon mathématiquement équivalent à la courbure de l'ellipse du ressort déformé, au voisinage du point de contact avec un intercalaire annulaire (15a, 15b) et/ou une cale annulaire de tête (13) ou de fond (16).

5. Assemblage selon l'une quelconque des revendications précédentes, **caractérisé en ce que** l'empilage aval (12) de bagues de tête et/ou l'empilage amont (17) de bagues de fond comportent des bagues graphites sous la forme d'éléments graphites de section carrée ou rectangulaire.

6. Assemblage selon l'une quelconque des revendications 1 à 4, **caractérisé en ce que** l'empilage aval (12) de bagues de tête et/ou l'empilage amont (17) de bagues de fond comportent des bagues graphites sous la forme d'éléments graphites coniques.

7. Assemblage selon l'une quelconque des revendications précédentes, **caractérisé en ce que** le lamage annulaire interne (5a) est étagé, définissant un premier diamètre intérieur de lamage (Di) et un deuxième diamètre intérieur de lamage (Di') du corps (5) de vanne ou de l'insert (7), le deuxième diamètre intérieur de lamage (Di') étant inférieur au premier diamètre intérieur de lamage (Di) et supérieur au premier diamètre extérieur (De) du fourreau (8), et **en ce que** le fourreau (8) est étagé, définissant un premier diamètre extérieur (De) et un deuxième diamètre extérieur (De') du fourreau (8), le deuxième diamètre extérieur (De') étant inférieur au premier diamètre intérieur de lamage (Di) du corps (5) ou de l'insert (7) et supérieur au premier diamètre extérieur (De) du fourreau (8).

8. Assemblage selon la revendication 7, **caractérisé en ce que** le deuxième diamètre intérieur de lamage (Di') est formé au niveau de la cale annulaire de fond (16) et de l'empilage amont (17) de bagues de fond, étant ainsi configuré pour permettre le guidage de la cale annulaire de fond (16) et de l'empilage amont (17) de bagues de fond uniquement, et **en ce que** le deuxième diamètre extérieur (De') est formé au niveau de l'empilage aval (12) de bagues de tête et de la cale annulaire de tête (13), étant ainsi configuré pour permettre le guidage de l'empilage aval (12) de bagues de tête et de la cale annulaire de tête (13) uniquement.

9. Assemblage selon la revendication 7 ou 8, **caractérisé en ce que** la cale annulaire de fond (16) est étagée, notamment de la même manière que le lamage annulaire interne (5a), et **en ce que** la cale annulaire de tête (13) est étagée, notamment de la même manière que le fourreau (8).

## Patentansprüche

1. Ringförmige Anordnung (10) zur Druckbeaufschlagung von einem Ventilsitz (6) eines Kugelventils (1), enthaltend:
- einen Ventilkörper (5) bzw. einen an den Ventilkörper (5) angesetzten Ventileinsatz (7), der mit einer ringförmigen, inneren Senkung (5a) versehen ist, die zumindest einen Senkungsinnendurchmesser (Di) des Ventilkörpers (5) bzw. des Ventileinsatzes (7) definiert,
- eine in die ringförmige, innere Senkung (5a) eingesetzte Hülse (8), die bezüglich des Ventilkörpers (5) bzw. Ventileinsatzes (7) zentriert befestigt ist, wobei die Hülse (8) zumindest einen Außendurchmesser (De) der Hülse (8) definiert,
wobei der Senkungsinnendurchmesser (Di) des Ventilkörpers (5) bzw. Ventileinsatzes (7) größer ist als der Außendurchmesser (De) der Hülse (8), so dass der Ventilkörper (5) bzw. Ventileinsatz (7) mit der Hülse (8) eine ringförmige Aufnahme (11) definiert,
**dadurch gekennzeichnet, dass** die Anordnung (10) in der ringförmigen Aufnahme aufeinanderfolgend, insbesondere in Richtung von stromabwärts nach stromaufwärts enthält:
- eine stromabwärtige Stapelung (12) von Kopfringen, insbesondere aus Graphit, die einen Innendurchmesser gleich dem Außendurchmesser (De) der Hülse (8) und einen Außendurchmesser gleich dem Innendurchmesser (Di) des Ventilkörpers (5) bzw. Ventileinsatzes (7) aufweisen, wobei diese stromabwärtige Stapelung (12) dazu bestimmt ist, neben dem Ventilsitz (6) des Kugelventils (1) angeordnet zu werden,
- einen ringförmigen Kopfkeil (13), der zwischen dem Außendurchmesser (De) der Hülse (8) und dem Innendurchmesser (Di) des Ventilkörpers (5) bzw. Ventileinsatzes (7) gleitbeweglich eingepasst ist,
- eine Stapelung von Kompressionsmitteln (14), die die Druckbeaufschlagung des Ventilsitzes (6) des Kugelventils (1) gestatten,
- einen ringförmigen Bodenkeil (16), der zwischen dem Außendurchmesser (De) der Hülse (8) und dem Innendurchmesser (Di) des Ventilkörpers (5) bzw. Ventileinsatzes (7) gleitbeweglich eingepasst ist,
- eine stromaufwärtige Stapelung (17) von Bodenringen, insbesondere aus Graphit, die einen Innendurchmesser gleich dem Außendurchmesser (De) der Hülse (8) und einen Außendurchmesser gleich dem Innendurchmesser (Di) des Ventilkörpers (5) bzw. Ventileinsatzes (7) aufweisen.

2. Anordnung nach Anspruch 1, **dadurch gekennzeichnet, dass** die Stapelung von Kompressionsmitteln (14) eine oder mehrere Spiralfedern (14a, 14b, 14c) enthält, die durch ringförmige Abstandshalter (15a, 15b) voneinander getrennt sind.

3. Anordnung nach Anspruch 2, **dadurch gekennzeichnet, dass** die axial verlaufenden Seiten der ringförmigen Abstandshalter (15a, 15b) und/oder die axial verlaufenden Seiten der ringförmigen Kopf- (13) und Bodenkeile (16) in Kontakt mit den Spiralfedern (14a, 14b, 14c) bogenförmige Schalen (18) aufweisen, die insbesondere so definiert sind, dass der Mittelpunkt eines jeden der Bögen auf einem Durchmesser liegt, der identisch zu dem mittleren Durchmesser der Spiralfeder (14a, 14b, 14c) ist, und so dass der Radius eines jeden Bogens gleich oder größer als der Windungsradius der Spiralfeder (14a, 14b, 14c) ist.

4. Anordnung nach Anspruch 3, **dadurch gekennzeichnet, dass** der Radius eines jeden Bogens größer als ein gegebener Wert (Req) ist, der als der Radius definiert ist, der mathematisch äquivalent zu der Krümmung der Ellipse der verformten Feder in der Nähe des Kontaktpunkts mit einem ringförmigen Abstandshalter (15a, 15b) und/oder einem ringförmigen Kopf- (13) oder Bodenkeil (16) ist.

5. Anordnung nach einem der vorangehenden Ansprüche, **dadurch gekennzeichnet, dass** die stromabwärtige Stapelung (12) von Kopfringen und/oder die stromaufwärtige Stapelung (17) von Bodenringen Graphitringe in Form von Graphitelementen mit quadratischem oder rechteckförmigen Querschnitt enthalten.

6. Anordnung nach einem der Ansprüche 1 bis 4, **dadurch gekennzeichnet, dass** die stromabwärtige Stapelung (12) von Kopfringen und/oder die stromaufwärtige Stapelung (17) von Bodenringen Graphitringe in Form von konischen Graphitelementen enthalten.

7. Anordnung nach einem der vorangehenden Ansprüche, **dadurch gekennzeichnet, dass** die ringförmige, innere Senkung (5a) gestuft ausgeführt ist und einen ersten Senkungsinnendurchmesser (Di) und einen zweiten Senkungsinnendurchmesser (Di') des Ventilkörpers (5) bzw. des Ventileinsatzes (7) definiert, wobei der zweite Senkungsinnendurchmesser (Di') geringer ist als der erste Senkungsinnendurchmesser (Di) und größer ist als der erste Außendurchmesser (De) der Hülse (8), und dass die Hülse (8) gestuft ausgeführt ist und einen ersten Außendurchmesser (De) und einen zweiten Außendurchmesser (De') der Hülse (8) definiert, wobei der zweite Außendurchmesser (De') geringer ist als der erste Senkungsinnendurchmesser (Di) des Ventilkörpers (5) bzw. Ventileinsatzes (7) und größer ist als der erste Außendurchmesser (De) der Hülse (8).

8. Anordnung nach Anspruch 7, **dadurch gekennzeichnet, dass** der zweite Senkungsinnendurchmesser (Di') im Bereich des ringförmigen Bodenkeils (16) und der stromaufwärtigen Stapelung (17) von Bodenringen ausgebildet ist und somit dazu ausgelegt ist, um das Führen nur von ringförmigem Bodenkeil (16) und stromaufwärtiger Stapelung (17) der Bodenringe zu gestatten, und dass der zweite Außendurchmesser (De') im Bereich der stromabwärtigen Stapelung (12) von Kopfringen und des ringförmigen Kopfkeils (13) ausgebildet ist und somit dazu ausgelegt ist, um das Führen nur von stromabwärtiger Stapelung (12) der Kopfringe und ringförmigem Kopfkeil (13) zu gestatten.

9. Anordnung nach Anspruch 7 oder 8, **dadurch gekennzeichnet, dass** der ringförmige Bodenkeil (16) gestuft ausgeführt ist, insbesondere in der gleichen Art und Weise wie die ringförmige, innere Senkung (5a), und dass der ringförmige Kopfkeil (13) gestuft ausgeführt ist, insbesondere in der gleichen Art und Weise wie die Hülse (8).

## Claims

1. Annular assembly (10) for compressing the seat (6) of a ball-valve (1), comprising:
- a valve body (5) or an insert (7) attached to the valve body (5), provided with an internal annular counter-bore (5a) defining at least one inner counter-bore diameter (Di) of the valve body (5) or of the insert (7),
- a sleeve (8) inserted into said internal annular counter-bore (5a), fixed and centred relative to the valve body (5) or to the insert (7), the sleeve (8) defining at least one outer diameter (De) of the sleeve (8),
the inner counter-bore diameter (Di) of the valve body (5) or of the insert (7) being greater than the outer diameter (De) of the sleeve (8) so that the valve body (5) or the insert (7) defines, with the sleeve (8), an annular housing (11) **characterized in that**, in said annular housing, the assembly (10) comprises, in succession, and in particular from downstream to upstream:
- a downstream stack (12) of head rings, in particular made of graphite, having an inner diameter equal to the outer diameter (De) of the sleeve (8) and an outer diameter equal to the inner diameter (Di) of the body (5) or of the insert (7), this downstream stack (12) being intended to be placed next to the seat (6) of the ball-valve (1).
- an annular head shim (13), which is a sliding fit between the outer diameter (De) of the sleeve (8) and the inner diameter (Di) of the body (5) or of the insert (7),
- a stack of means of compression (14) used to compress the seat (6) of the ball-valve (1),
- an annular base shim (16), which is a sliding fit between the outer diameter (De) of the sleeve (8) and the inner diameter (Di) of the body (5) or of the insert (7), and
- an upstream stack (17) of base rings, in particular made of graphite, having an inner diameter equal to the outer diameter (De) of the sleeve (8) and an outer diameter equal to the inner diameter (Di) of the body (5) or of the insert (7).

2. Assembly according to claim 1, **characterised in that** the stack of means of compression (14) comprise one or more helical springs (14a, 14b, 14c) separated from each other by annular spacers (15a, 15b).

3. Assembly according to claim 2 **characterised in that** the axial faces of the annular spacers (15a, 15b) and/or the axial faces of the annular head shims (13) and base shims (16), which are in contact with the coil springs (14a, 14b, 14c), comprise recesses (18) in the form of arcs, in particular defined so that the centre of each of the arcs is located on a diameter which is identical to the mean diameter of the helical spring (14a, 14b, 14c) and such that the radius of each arc is equal to or greater than the coil radius of the helical spring (14a, 14b 14c).

4. Assembly according to claim 3, **characterised in that** the radius of each arc is greater than a given value (Req), defined as the radius mathematically equivalent to the curvature of the ellipse of the deformed spring in the vicinity of the contact point with an annular spacer (15a, 15b) and/or an annular head (13) or base shim (16).

5. Assembly according to any whatsoever of the preceding claims **characterised in that** the downstream stack (12) of head rings and/or the upstream stack (17) of base rings comprise graphite rings in the form of graphite elements of square or rectangular section.

6. Assembly according to any whatsoever of claims 1 to 4, **characterised in that** the downstream stack (12) of head rings and/or the upstream stack (17) of base rings comprise graphite rings in the form of tapered graphite elements.

7. Assembly according to any whatsoever of the preceding claims, **characterised in that** the internal annular counter-bore (5a) is stepped, defining a first inner counter-bore diameter (Di) and a second inner counter-bore diameter (Di') of the valve body (5) or of the insert (7), the second inner counter-bore diameter (Di') being smaller than the first inner counter-bore diameter (Di) and greater than the first outer diameter (De) of the sleeve (8) and **in that** the sleeve (8) is stepped, defining an first outer diameter (De) and a second outer diameter (De') of the sleeve (8), the second outer diameter (De') being smaller than the first inner counter-bore diameter (Di) of the body (5) or of the insert (7) and greater than the first outer diameter (De) of the sleeve (8).

8. Assembly according to claim 7, **characterised in that** the second inner counter-bore diameter (Di') is formed at the annular base shim (16) and at the upstream stack (17) of base rings (16), being thus configured to guide the annular base shim (16) and the upstream stacks (17) of base rings only, and **in that** the second external diameter (De') is formed at the downstream stack (12) of head rings and at the annular head shim (13), being thus configured to guide the downstream stack (12) of head rings and the annular head shim (13) only.

9. Assembly according to claim 7 or 8, **characterised in that** the annular base shim (16) is stepped, in particular in the same way as the annular internal counter-bore (5a) and **in that** the annular head shim (13) is stepped, in particular in the same way as the sleeve (8).
